# EUROPEAN PATENT SPECIFICATION

(11) **EP 4 698 296 B1**
(45) Date of publication and mention of the grant of the patent: **30.09.2026**
(21) Application number: 24721070.1
(22) Date of filing: 12.04.2024
(51) Int. Cl.: B01D 45/06, F01M 13/04

(54) **AIR-OIL SEPARATION SYSTEM**
LUFT-ÖL-TRENNSYSTEM
SYSTÈME DE SÉPARATION AIR-HUILE

(30) Priority: 19.04.2023 IT 202300007680
(43) Date of publication of application: 25.02.2026
(73) Proprietor: NUOVO PIGNONE TECNOLOGIE - S.R.L., 50127 Florence (IT)
(72) Inventor: TAMMA, Karteek Reddy, Guntur District Andhra Pradesh 522501 (IN); PELELLA, Marco, 50127 Florence, Firenze (IT); TONI, Lorenzo, 50127 Florence, Firenze (IT); RAMALINGAM RENGASAMY, Vidyasagar, Bangalore, Karnataka 560043 (IN); MEDURI, Uday Karthik, Whitefield Bangalore, Karnataka 560066 (IN)
(74) Representative: Novagraaf Group
(86) International application number: PCT/EP2024/025147
(87) International publication number: WO 2024/217723

(56) References cited:
- CN-A- 110 529 218
- DE-A1- 102010 042 883
- JP-A- 2011 127 458
- US-A1- 2012 312 272
- US-A1- 2022 259 993

## Description

### TECHNICAL FIELD

The present disclosure concerns an air-oil separation system. Embodiments disclosed herein specifically concern a static separation system that separates oil from air being designed to prevent lubricating oil mist from escaping into the atmosphere.

### BACKGROUND ART

In air flows with dispersed suspended oil droplets, such as the lubricating oil leaking from a rotating or reciprocating machine in a thermodynamic system, said oil droplets are often vented together with the air flow to the atmosphere.

The dispersion of lubricating oil into the atmosphere results in contamination of environment and additionally requires for frequent replenishment of expensive lubricating oil in the system.

In order to avoid oil dispersion it is possible to separate oil from the air flow, according to a conventional oil separation system a high-density filter can be used. Because of the high density filters, the cooling flow to the coupling guard gets reduced, which in turn increases the temperature inside the coupling guard.

In other embodiments of the current art, coalescing filter element are used. This type of filter element essentially comprises of two parts, an inner and an outer layer. The inner layer consists of a high-efficiency coalescing stage whilst the outer layer is a courser stage used for drainage. Any liquid aerosols or droplets are caught within the fine fibres of the inner layer, eventually accumulating to the extent that they are forced to the outer layer of the filter element and in to the bowl of the housing. However, said kind of filters are expensive, they need to be replaced in regular intervals and they have high resistance offered to the flow.

In other embodiments of the current art. US 2012/312272 A1 discloses an oil separator of an internal combustion engine. DE 10 2010 042883 A discloses an oil mist separator for use at a cylinder head cover of a prime mover.

Accordingly, an improved static separation system to address the issues of separating oil from the air flow of the systems of the current art would be beneficial and would be welcomed in the technology. More in general, it would be desirable to provide systems adapted to separate oil more efficiently by reducing the amount of oil escaping into the atmosphere. In addition, it would be desirable to provide systems of simple design with minimal flow resistance and easy to install on existing machines.

### SUMMARY

The present invention is defined in the accompanying claims. In one aspect, the subject matter disclosed herein is directed to an air-oil separation system to separate oil droplets from an air flow, the air-oil separation system comprising a piping having an inlet and an outlet of said air flow, the piping comprising a first ascending section downstream the inlet, in which air flows from bottom to top, a portion of the first ascending section having an upwards increasing cross-section to reduce flow velocity and promote coalescence of oil droplets; a horizontal or descending section, connected downstream said first ascending section through a bent section, the horizontal or descending section having an end plate and a lower portion wherein oil droplets gets deposited due to gravity, wherein oil droplets hit the end plate and form a thin film over it, the thin film of oil droplets draining towards the lower portion of the horizontal or descending section; a second ascending section connecting the horizontal or descending section with the outlet of the piping, the second ascending section being connected to the final portion of the horizontal or descending section, upstream the end plate, the portion of the horizontal or descending section comprised between the connection with the second ascending section and the end plate forming a dead end section; a draining pipe with a first end connected to a lower portion of the dead end section; and a transversal partial obstruction at the upper part of the final portion of the horizontal or descending section, upstream the connection with the second ascending section.

In another aspect, the air-oil separation system further comprises a collector tank, coupled to a second end of the draining pipe and adapted to containing oil separated from the air flow.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates an air-oil separation system according to a first embodiment;
Fig.2 illustrates a portion of the air-oil separation system, according to the first embodiment; and
Fig.3 illustrates an air-oil separation system and a tank combined therewith, according to a second embodiment.

### DETAILED DESCRIPTION OF EMBODIMENTS

According to one aspect, the present subject matter is directed to a vent configuration designed to separate oil droplets dispersed in an exhaust air flow of a coupling and its guard system, the separation being based on the inertia of the fluid. Specifically, in the embodiments disclosed herein an air-oil separation system is provided, which include a diffusing vertical pipe and a 90° bend followed by an obstruction and a barrier. Such series of physical events captures the dispersed oil droplets from the air medium and prevent its leakage into the atmosphere. The captured oil is drained away via separate draining pipe.

Reference now will be made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the disclosure. Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

When introducing elements of various embodiments the articles "a", "an", "the", and "said" are intended to mean that there are one or more of the elements. The terms "comprising", "including", and "having" are intended to be inclusive and mean that there may be additional elements other than the listed elements.

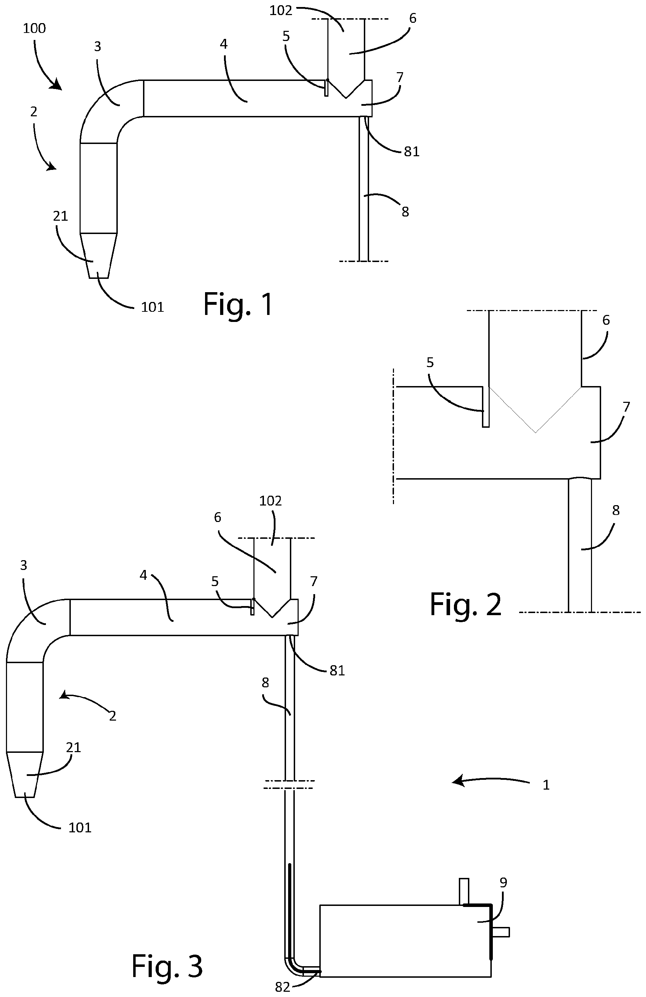

Referring now to the drawings, Fig.1 shows an air-oil separation system 1 configured to separate oil droplets from an air flow. The air-oil separation system 1 comprises a piping 100 having an inlet 101 and an outlet 102 of said air flow, the diameter size of the piping 100 at the inlet 101 being smaller than the diameter size of the piping 100 at the outlet 102.

In particular, the piping 100 comprises at least a first ascending section 2 downstream said inlet 101, the first ascending section 2 having an axis forming an angle α from 80° to 100° with respect to the horizontal. In addition, a portion 21 of the first ascending section 2 has an upwards increasing cross-section, with a diameter size increasing from the diameter size of the piping 100 at the inlet 101 to the diameter size of the piping 100 at the outlet 102, to reduce flow velocity and promote coalescence of oil droplets. Referring to the exemplary embodiment of Fig. 1, the first ascending section 2 is a vertical section.

In addition, the piping 100 comprises a horizontal or descending section 4, downstream said first ascending section 2, wherein oil droplets get deposited on a bottom wall of said horizontal or descending section 4 due to gravity. In addition, the horizontal or descending section 4 has an axis forming an angle β from 0° to -20° with respect to the horizontal. The diameter size of the horizontal or descending section 4 is constant and equal to the diameter size of the piping 100 at the outlet 102. Furthermore, the horizontal or descending section 4 has an end plate 7. Referring to the exemplary embodiment of Fig. 1, the horizontal or descending section 4 is a horizontal section.

In addition, the piping 100 comprises a second ascending section 6 connecting the horizontal or descending section 4 with the outlet 102 of the piping 100. In particular, the second ascending section 6 has an axis forming an angle γ from 80°to 100° with respect to the horizontal. Referring to the exemplary embodiment of Fig. 1, the second ascending section 6 is a vertical section. The diameter size of the second ascending section 6 is constant and equal to the diameter size of the piping 100 at the outlet 102.

The second ascending section 6 is connected to the final portion of the horizontal or descending section 4, upstream the end plate 7. Furthermore, the portion of the horizontal or descending section 4 comprised between the connection with the second ascending section 6 and the end plate 7 forms a dead end section, wherein, due to the sudden change in direction of flow, oil droplets hits the end plate 7 and form a thin film over it.

With continuing reference to Fig. 1, the first ascending section 2 and the horizontal or descending section 4 are connected by a bend section 3, with a radius comprised between 1,2 and 1,25 of the piping diameter. In particular, the bent section 3 offers minimal resistance to the air-flow field, preventing additional losses. Additionally, the bent section allows the air-flow being evenly distributed in the cross section along the passage from the first ascending section 2 and the horizontal or descending section 4, preventing any liquid backflow into the supply line.

With continuing reference to Fig.1 and Fig.2, the piping 100 comprises a transversal partial obstruction 5 at the upper part of the final portion of the horizontal or descending section 4, upstream the connection with the second ascending section 6, wherein the remaining oil droplets gets accelerated due to the vertical barrier.

With reference to Fig. 1 and Fig. 3, the piping 100 comprises a draining pipe 8 with a first end 81 connected to a lower wall of the dead end section.

The air-oil separation system 1 further comprises a collector tank 9 coupled to a second end 82 of the draining pipe 8. In particular, the second end 82 of the draining pipe can be connected to the bottom of the collector tank 9 in order to prevent the air flow from escaping through the draining pipe 8 as well.

In a not shown exemplary embodiment of the present disclosure, the air-oil separation system 1 further comprises a siphon coupled to the second end 82 of the draining pipe 8 in order to prevent the air flow from escaping through the draining pipe 8 as well. In addition, in a further not shown embodiment, the air-oil separation system 1 further comprising a horizontal S bend coupled to the second end 82 of the draining pipe 8 in order to prevent the air flow from escaping through the draining pipe 8.

While the invention has been described in terms of various specific embodiments, it will be apparent to those of ordinary skill in the art that many modifications, changes, and omissions are possible without departing form the spirt and scope of the claims. In addition, unless specified otherwise herein, the order or sequence of any process or method steps may be varied or re-sequenced according to alternative embodiments.

For instance, while in the above disclosed embodiments an oil separation system is described, which is aimed at separating the lubricating oil leaking from a rotating or reciprocating machine in a thermodynamic system more efficiently, reducing the amount of oil escaping into atmosphere and, those skilled in the art will understand that the oil separation system 1 can be used in different thermodynamic systems, in which separation of the oil may be required.

## Claims

1. An air-oil separation system (1) to separate oil droplets from an air flow, the air-oil separation system **characterized by** comprising a piping (100) having an inlet (101) and an outlet (102) of said air flow, the diameter size of the piping (100) at the inlet (101) being smaller than the diameter size of the piping (100) at the outlet (102), the piping (100) comprising
- a first ascending section (2) downstream said inlet (101), the first ascending section (2) having an axis forming an angle α from 80° to 100° with respect to the horizontal, a portion (21) of the first ascending section (2) having an upwards increasing cross-section with a diameter size increasing from the diameter size of the piping at the inlet (101) to the diameter size of the piping at the outlet (102);
- a horizontal or descending section (4), downstream said first ascending section (2), the diameter size of the horizontal or descending section (4) being constant and equal to the diameter size of the piping at the outlet (102), the first ascending section (2) and the horizontal or descending section (4) being connected by a bent section (3), the horizontal or descending section having an axis forming an angle β from 0° to -20°with respect to the horizontal, the horizontal or descending section having an end plate (7);
- a second ascending section (6) connecting the horizontal or descending section (4) with the outlet (102) of the piping, the diameter size of the second ascending section (6) being constant and equal to the diameter size of the piping at the outlet (102), the second ascending section (6) having an axis forming an angle γ from 80°to 100° with respect to the horizontal, the second ascending section (6) being connected to the final portion of the horizontal or descending section (4), upstream the end plate (7), the portion of the horizontal or descending section comprised between the connection with the second ascending section and the end plate forming a dead end section;
- a draining pipe (8) with a first end (81) connected to a lower portion of the dead end section;
- a transversal partial obstruction (5) at the final portion of the horizontal or descending section (4), upstream the connection with the second ascending section.

2. The air-oil separation system of claim 1, further comprising a collector tank (9) coupled to a second end (82) of the draining pipe (8).

3. The air-oil separation system of claim 2, wherein the second end (82) of the draining pipe (8) is connected to the bottom of the collector tank (9).

4. The air-oil separation system of claim 2, further comprising a siphon coupled to a second end (82) of the draining pipe (8).

5. The air-oil separation system of claim 2, further comprising a horizontal S bend coupled to a second end (82) of the draining pipe (8).

6. The air-oil separation system of any of the preceding claims, wherein the first ascending section (2) is a vertical section.

7. The air-oil separation system of any of the preceding claims, wherein the horizontal or descending section (4) is a horizontal section.

8. The air-oil separation system of any of the preceding claims, wherein the size of the radius of the bent section (3) connecting the first ascending section (2) and the horizontal or descending section (4) is comprised between 1.2 and 1.25 of the diameter size of the piping (100).

9. The air-oil separation system of any of the preceding claims, wherein the second ascending section (6) is a vertical section.

10. The air-oil separation system of any of the preceding claims, wherein the transversal partial obstruction (5) at the final portion of the horizontal or descending section obstructs the upper portion of the horizontal or descending section (4).

## Patentansprüche

1. Luft-Öl-Trennsystem (1), um Öltropfen von einem Luftdurchfluss zu trennen, wobei das Luft-Öl-Trennsystem **dadurch gekennzeichnet ist, dass** es eine Verrohrung (100) aufweist, die einen Einlass (101) und einen Auslass (102) des Luftdurchflusses aufweist, wobei die Durchmessergröße der Verrohrung (100) an dem Einlass (101) kleiner als die Durchmessergröße der Verrohrung (100) an dem Auslass (102) ist, die Verrohrung (100) umfassend
- einen ersten ansteigenden Bereich (2) stromabwärts von dem Einlass (101), wobei der erste ansteigende Bereich (2) eine Achse aufweist, die einen Winkel α von 80° bis 100° in Bezug auf die Horizontale ausbildet, wobei ein Abschnitt (21) des ersten ansteigenden Bereichs (2) einen nach oben zunehmenden Querschnitt mit einer Durchmessergröße aufweist, die von der Durchmessergröße der Verrohrung an dem Einlass (101) auf die Durchmessergröße der Verrohrung an dem Auslass (102) zunimmt;
- einen horizontalen oder absteigenden Bereich (4), stromabwärts von dem ersten ansteigenden Bereich (2), wobei die Durchmessergröße des horizontalen oder absteigenden Bereichs (4) konstant und gleich der Durchmessergröße der Verrohrung an dem Auslass (102) ist, wobei der erste ansteigende Bereich (2) und der horizontale oder absteigende Bereich (4) durch einen gekrümmten Bereich (3) verbunden sind, wobei der horizontale oder absteigende Bereich eine Achse aufweist, die einen Winkel β von 0° bis -20° in Bezug auf die Horizontale ausbildet, wobei der horizontale oder absteigende Bereich eine Endplatte (7) aufweist;
- einen zweiten ansteigenden Bereich (6), der den horizontalen oder absteigenden Bereich (4) mit dem Auslass (102) der Verrohrung verbindet, wobei die Durchmessergröße des zweiten ansteigenden Bereichs (6) konstant und gleich der Durchmessergröße der Verrohrung an dem Auslass (102) ist, wobei der zweite ansteigende Bereich (6) eine Achse aufweist, die einen Winkel γ von 80° bis 100° in Bezug auf die Horizontale ausbildet, wobei der zweite ansteigende Bereich (6) mit dem Schlussabschnitt des horizontalen oder absteigenden Bereichs (4) stromaufwärts von der Endplatte (7) verbunden ist, wobei der Abschnitt des horizontalen oder absteigenden Bereichs, der zwischen der Verbindung mit dem zweiten ansteigenden Bereich und der Endplatte umfasst ist, einen blinden Endbereich ausbildet;
- ein Ablaufrohr (8) mit einem ersten Ende (81), das mit einem unteren Abschnitt des blinden Endbereichs verbunden ist;
- eine transversale Teilblockierung (5) an dem Schlussabschnitt des horizontalen oder absteigenden Bereichs (4), stromaufwärts von der Verbindung mit dem zweiten ansteigenden Bereich.

2. Luft-Öl-Trennsystem nach Anspruch 1, ferner umfassend einen Sammelbehälter (9), der mit einem zweiten Ende (82) des Ablaufrohrs (8) gekoppelt ist.

3. Luft-Öl-Trennsystem nach Anspruch 2, wobei das zweite Ende (82) des Ablaufrohrs (8) mit dem Boden des Sammelbehälters (9) verbunden ist.

4. Luft-Öl-Trennsystem nach Anspruch 2, ferner umfassend einen Siphon, der mit einem zweiten Ende (82) des Ablaufrohrs (8) gekoppelt ist.

5. Luft-Öl-Trennsystem nach Anspruch 2, ferner umfassend einen horizontalen Doppelkrümmer, der mit einem zweiten Ende (82) des Ablaufrohrs (8) gekoppelt ist.

6. Luft-Öl-Trennsystem nach einem der vorstehenden Ansprüche, wobei der erste ansteigende Bereich (2) ein vertikaler Bereich ist.

7. Luft-Öl-Trennsystem nach einem der vorstehenden Ansprüche, wobei der horizontale oder absteigende Bereich (4) ein horizontaler Bereich ist.

8. Luft-Öl-Trennsystem nach einem der vorstehenden Ansprüche, wobei die Größe des Radius des gekrümmten Bereichs (3), der den ersten ansteigenden Bereich (2) und den horizontalen oder absteigenden Bereich (4) verbindet, zwischen 1,2 und 1,25 der Durchmessergröße der Verrohrung (100) umfasst ist.

9. Luft-Öl-Trennsystem nach einem der vorstehenden Ansprüche, wobei der zweite ansteigende Bereich (6) ein vertikaler Bereich ist.

10. Luft-Öl-Trennsystem nach einem der vorstehenden Ansprüche, wobei die transversale Teilblockierung (5) an dem Schlussabschnitt des horizontalen oder absteigenden Bereichs den oberen Abschnitt des horizontalen oder absteigenden Bereichs (4) blockiert.

## Revendications

1. Système de séparation air-huile (1) destiné à séparer les gouttelettes d'huile d'un flux d'air, le système de séparation air-huile **étant caractérisé en ce qu'il** comprend une tuyauterie (100) ayant une entrée (101) et une sortie (102) dudit flux d'air, la taille de diamètre de la tuyauterie (100) au niveau de l'entrée (101) étant inférieure à la taille de diamètre de la tuyauterie (100) au niveau de la sortie (102), la tuyauterie (100) comprenant
- une première section ascendante (2) en aval de ladite entrée (101), la première section ascendante (2) ayant un axe formant un angle α de 80 ° à 100 ° par rapport à l'horizontale, une partie (21) de la première section ascendante (2) ayant une section transversale croissante vers le haut avec une taille de diamètre augmentant allant de la taille de diamètre de la tuyauterie au niveau de l'entrée (101) à la taille de diamètre de la tuyauterie au niveau de la sortie (102) ;
- une section horizontale ou descendante (4), en aval de ladite première section ascendante (2), la taille de diamètre de la section horizontale ou descendante (4) étant constante et égale à la taille de diamètre de la tuyauterie au niveau de la sortie (102), la première section ascendante (2) et la section horizontale ou descendante (4) étant reliées par une section coudée (3), la section horizontale ou descendante ayant un axe formant un angle β de 0 ° à -20 ° par rapport à l'horizontale, la section horizontale ou descendante ayant une plaque d'extrémité (7) ;
- une seconde section ascendante (6) reliant la section horizontale ou descendante (4) à la sortie (102) de la tuyauterie, la taille de diamètre de la seconde section ascendante (6) étant constante et égale à la taille de diamètre de la tuyauterie au niveau de la sortie (102), la seconde section ascendante (6) ayant un axe formant un angle γ de 80 ° à 100 ° par rapport à l'horizontale, la seconde section ascendante (6) étant reliée à la partie finale de la section horizontale ou descendante (4), en amont de la plaque d'extrémité (7), la partie de la section horizontale ou descendante comprise entre la liaison avec la seconde section ascendante et la plaque d'extrémité formant une section sans issue ;
- un tuyau de drainage (8) avec une première extrémité (81) raccordée à une partie inférieure de la section en cul-de-sac ;
- une obstruction partielle transversale (5) au niveau de la partie finale de la section horizontale ou descendante (4), en amont de la liaison avec la seconde section ascendante.

2. Système de séparation air-huile selon la revendication 1, comprenant en outre un réservoir collecteur (9) accouplé à une seconde extrémité (82) du tuyau de drainage (8).

3. Système de séparation air-huile selon la revendication 2, dans lequel la seconde extrémité (82) du tuyau de drainage (8) est reliée au fond du réservoir collecteur (9).

4. Système de séparation air-huile selon la revendication 2, comprenant en outre un siphon accouplé à une seconde extrémité (82) du tuyau de drainage (8).

5. Système de séparation air-huile selon la revendication 2, comprenant en outre un coude en S horizontal accouplé à une seconde extrémité (82) du tuyau de drainage (8).

6. Système de séparation air-huile selon l'une quelconque des revendications précédentes, dans lequel la première section ascendante (2) est une section verticale.

7. Système de séparation air-huile selon l'une quelconque des revendications précédentes, dans lequel la section horizontale ou descendante (4) est une section horizontale.

8. Système de séparation air-huile selon l'une quelconque des revendications précédentes, dans lequel la taille du rayon de la section courbée (3) reliant la première section ascendante (2) et la section horizontale ou descendante (4) est comprise entre 1,2 et 1,25 de la taille du diamètre de la tuyauterie (100).

9. Système de séparation air-huile selon l'une quelconque des revendications précédentes, dans lequel la seconde section ascendante (6) est une section verticale.

10. Système de séparation air-huile selon l'une quelconque des revendications précédentes, dans lequel l'obstruction partielle transversale (5) au niveau de la partie finale de la section horizontale ou descendante obstrue la partie supérieure de la section horizontale ou descendante (4).
